# EUROPEAN PATENT APPLICATION

(11) **EP 4 580 220 A1**
(43) Date of publication of application: **02.07.2025**
(21) Application number: 23307393.1
(22) Date of filing: 27.12.2023
(51) Int. Cl.: H04W 4/021, H04W 4/60, H04W 48/16, H04W 48/18

(54) **A SYSTEM FOR SWITCHING THE CONNECTION OF A SECURE ELEMENT FROM A PUBLIC NETWORK TO A PRIVATE NETWORK, CORRESPONDING APPLET AND ENTITY**

(71) Applicant: THALES DIS FRANCE SAS, 92190 Meudon (FR)
(72) Inventor: DEMARTY, Joel, 35520 MONTREUIL LE GAST (FR); VOYER, Jérome, 13390 AURIOL (FR)
(74) Representative: Scheer, Luc

(57) **Abstract**

The present invention proposes a system for switching the connection of a secure element 30 from a public network to a private network, the secure element 30 cooperating with a telecommunication terminal 31, wherein it comprises:
- an entity 32 connected to or comprising a global private network database 37 storing the physical topology of the private network, the entity 32 being accessible by the telecommunication terminal 31, the physical topology of the private network being dynamically updated by at least secure elements of telecommunication terminals having access to the private network,
- in each of a plurality of secure elements having access to the private network and cooperating with telecommunication terminals 31, an applet 33 comprising or being connected to a local private network topology database 34 sharing its content with the global private network database 37, the applet 33 switching the connection of the secure element 30 from a public network to the private network when the applet 33 considers that the telecommunication terminal 31 with which it cooperates enters in the coverage of the physical topology of the private network, based on the content of the local private network topology database 34.

## Description

The present invention concerns telecommunications and more precisely secure elements like UICCs (Universal Integrated Circuit Cards) like SIM cards, USIMs, eUICCs (embedded UICCs) or iUICCs (integrated UICCs). These secure elements cooperate with telecommunication terminals (UE for User Equipment) like smartphones, mobile phones, PDAs or loT devices for example.

Secure elements have the purpose to establish and secure communications between telecommunication terminals and telecommunication networks.

There are two major kinds of telecommunication networks: Public and private. Public telecommunication networks are also called PLMNs (Public Land Mobile Networks). A PLMN can be a Home PLMN (HPLMN) or a visited PLMN (VPLMN).

In schools, airports, big factories, energy utilities, manufacturing sites, ports or offshore platforms for example, private cellular networks or NPN (Non-Public Networks) can be installed to restrict the access to these networks to given and identified users of telecommunication terminals that are covered by these private cellular networks.

A NPN is for example installed in a large-scale airport and it is desired to provide good quality mobile connection in this area. It is thus possible to build a privately owned mobile network, "rent" some of the mobile operator's or ask the mobile operator to build/provide one for this purpose.

Whilst the concept has been implemented in previous generations, 5G specifications support various configurations of NPN.

NPN provides three benefits in terms of performance. First, NPN brings optimized coverage for the owner as the network is deployed for the owner's purpose and not for the public in general. Second, the local presence of some network entities reduces physical distance and number of network hops required for the use case, reducing the latency of NPN. Finally, the local presence reduces uncertainty of network operation, as the disruption (e.g., outage, fault) of the corresponding entities can be managed/resolved inside.

NPN also enables more control from the owner's side in general. The security of the network can be enhanced by restricting unauthorized users and the privacy of the data treated can be enhanced. In addition, traffic can be prioritized depending on the types of users in the organization as per its requirements. Similarly, management of congestion and interference can be optimized according to the requirement of the organization.

While there are many possible configurations of NPNs, 3GPP defines two major categories of NPNs: Standalone Non-Public Network (SNPN) and Public network integrated NPN (PNI-NPN). In one extreme, there is SNPN, which refers to an NPN that does not rely on network functions provided by a Public Land Mobile Network (PLMN), mobile network operator in simple words. SNPN deployed in isolation corresponds to the concept of private network and it indicates that SNPN involves more investment and commitment from the owner. In the other extreme, there is PNI-NPN, which refers to an NPN that is deployed with the support of a PLMN. PNI-NPN may be deployed as a private slice (dedicated network slice by the PLMN for the sole use of the owner), or it may involve part of the networks being deployed by the PLMN and others by the owner.

The purpose of the invention is to switch from a globally accessible public network to a locally accessible private network. This switch is initiated by the secure element as soon as it detects the presence of the private network (the terminal with which it cooperates is covered by the private network). This switch is notably performed to minimize communication costs, tackle security risks and narrow the attack surface.

The term "private network" used in this invention is equivalent to Non-Public Network (or NPN in 3GPP specifications) or is also sometimes called Mobile Private Network (MPN).

3GPP does not allow a search for higher priority PLMN when a UE is camping on a HPLMN or EHPLMN (Equivalent Home PLMN).

Existing solutions for switching from a globally accessible public network to a local private network either rely on:
- Setting the global public network as a visited PLMN (VPLMN) with the related issues e.g. on user experience or due to user preference to limit data access when in roaming, and by default mobile terminals (telecommunication terminals) are setup to prevent data usage when in roaming;
- Using the SIM Toolkit location status event sent by the ME to the USIM, but such method is not optimal when the Private Network is not immediately available after such an event;
- Support by the ME of a specific method for the USIM to force the ME to perform Network Selection procedure.

These existing methods have however an impact either on the battery usage or on the User Experience e.g., long delay before switching to the private network or frequent period of UE reinitialization (unavailable for normal use).

It is outlined in 3GPP TS 22.011 that, when connected to a home network or a visited network, a counter (which value is stored in EF_HPPLMN) can be setup to define a time interval between two attempts to connect to a private network. EFHPPLMN (Higher Priority PLMN search period) is a file that contains the interval of time between searches for a higher priority PLMN.

But even if this counter is set up to one (6F31 field equals 1), the secure element will wait nx6 minutes (i.e. 6 minutes if n=1) between two attempts to connect to a private network. This time interval is too long for many applications: It is desired to shorten it to the lowest duration possible, especially when the private network is a military network or for lOPS (Isolated Operation for Public Safety) use cases for disaster recovery.

So, the technical problem the invention intends to solve is: How to automatically force the ME to switch from a globally accessible Public Network to a local Private Network, as soon as possible, without modification of the ME, and with lowest impact on battery consumption and usability.

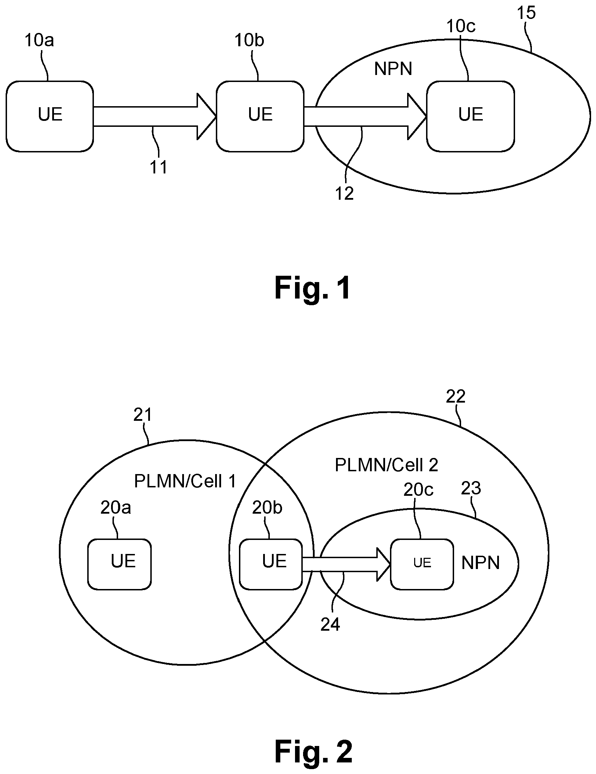

The problem will be better understood in regard of figure 1.

Figure 1 represents a User Equipment (UE or telecommunication terminal) 10a registered on a PLMN (Public and Mobile Network). Reference 11 represents a HPPLMN search period: After this period, the UE is referenced 10b since it has moved in direction of a NPN 12. After another period of time defined in the HPPLMN, the UE is under coverage of the private network 15 and referenced 10c and can connect to it. However, as already said, the UE will only connect to the NPN 15 after maximum 6 minutes that is a too long duration.

This problem is solved, according to the invention, by a system according to claim 1.

The invention also concerns an applet and an entity for performing such a switch of network according to claims 11 and 12.

The invention will be better understood by reading the following description of a preferred architecture of the invention, in regard of the figures that represent:
- Figure 1 the state of the art;
- Figure 2 the result of an accelerated switch from a PLMN to a private network obtained thanks to the invention;
- Figure 3 the architecture of a system according to the invention.
Figure 1 has already been described in regard of the state of the art.

Figure 2 represents the result of an accelerated switch from a PLMN to a private network obtained thanks to the invention.

In this figure, in a first step, a UE 20a is under coverage of a PLMN having two cells 21 and 22 (i.e. two BTS or eNBs or gNBs). In a second, step, the UE has moved in direction of a NPN 23 and is referenced 20b. At this geographical position, the UE 20b is covered by the cells 21 and 22.

The UE 20b continues to move in direction of the NPN 23 and a trigger 24 that will be explained herein after switches the connection from the UE 20b ready to enter in the coverage of the NPN 23 from the cell 22 to the cell 23 of the NPN 23. This means that as soon as the UE enters in the cell 23 of a private network, the UE, referenced 20c is connected to this private network. Even if, as represented, the NPN is entirely covered by the PLMN cell 22, the UE 20b will not wait for the HPPLMN search duration for trying to connect to the NPN. This means that the switch from a public network to a private network is accelerated.

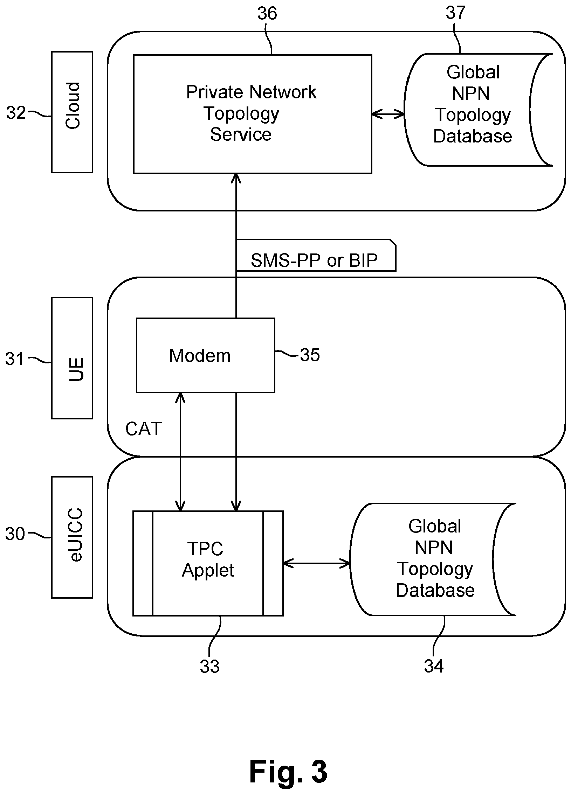

This result is obtained thanks to an architecture of a system described herein after in regard of figure 3.

In this figure, three elements are represented:
- a secure element like a eUICC for example 30;
- a User Equipment UE 31 cooperating with the secure element 30;
- a cloud 32.

The secure element 30 stores an applet 33, called TPC applet (standing for Topology Private Connect applet), that comprises or is connected to a local private network topology database 34. More precisely, the secure elements of the present invention having access to a given private network comprise an applet comprising or being connected to a local private network topology database. The secure elements having access to the private network that do not embed such an applet do not have the advantages proposed by the invention.

The UE (or telecommunication terminal) 31 and the secure element 30 are cooperating. In the case the secure element is an eUICC or an iUICC, the secure element 30 is embedded in the telecommunication terminal 31. It is also possible that the form factor of the secure element 30 is one of a Sim card or an UICC, in which case the secure element 30 is extractible from the UE 31. The UE 31 comprises classically a modem 35 communicating with the TPC applet 33, for example by CAT commands (Card Application Toolkit).

The cloud 32 can be replaced by as dedicated server.

The TPC applet 33 communicates with a private network topology service 36 comprised in the cloud or the dedicated server. This private network topology service 36 is an entity, for example a server or a SaaS (Software as a service). Software as a service allows users to connect to and use cloud-based applications over the Internet. The private network topology service 36 can be either in a public cloud or a private cloud or in premises. It is a service accessible from the Internet.

This entity 36 is connected to or comprises a global private network database 37 storing the physical topology of a private network (at least one private network), this entity 36 being accessible by the UE 31. The physical topology of the private network (geographic coverage of the cells of the private network essentially) is dynamically updated by at least secure elements 30 embedding the TPC applet 33 having access to this private network.

The TPC applet 33 shares the content of its local private network topology database 34 with the global private network database 37 through a bi-directional channel, being SMS-PP (Point to Point) or BIP (Bearer Independent Protocol) in order to share its knowledge of geographical topology of the private network with other eUICCs having also access to the private network and comprising also a TPC applet 33 and a local private network topology database.

The function of the TPC applet is to order a switch of the connection of the UE 31 from a public network to which it is connected to a private network since this private network is reachable by the UE 31 (establish a radio link). This switch is operated when the applet considers that the telecommunication terminal with which it cooperates enters in the coverage of the physical topology of the private network. This consideration is based on the content of the local private network topology database 34.

The switch can be ordered via a CAT command (SIM_REFRESH) sent to the modem 35 of the UE 31.

The result is that the UE 31 will connect to the private network (to one of the cells of the private network) immediately, based on the physical topology of the private network (coverage of its cells).

The global private network database 37 can not only be updated by the content of the different local private network topology databases 34 of the eUICCs 30 embedding such local databases, but also by inputs from the MNO operating the private network. To this end, the MNO can provide to the global private network database 37 data permitting eUICCs of the present invention to improve their knowledge of the physical topology of the private network. This is particularly important when the MNO installs, decommissions or changes the configuration of cells since the physical topology of the private network can then be importantly modified.

The CAT commands can also be used by the UE 31 to record in the TPC applet 33, when registered on a private network, its current location information. The UE then uses a CAT EVENT DOWNLOAD - Location Status Event to update the local private network database 34. This location information can for example contain its MCC, MNC, Cell-Id and Timing Advance. In order to improve the accuracy of its local private network database 34, when a UE 31 has found an identifier of the private network in his high Priority PLMN list, and if the registration attempt to the private network is successful, the TPC applet 33 updates its local private network database 34 with its current location information.

In contrast, if the TPC applet 33 has switched the connection of its secure element 30 from a public network to the private network and if the registration of the secure element 30 with the private network fails, the applet updates its local private network database 34 to indicate that the private network is not available. For the same purpose, if a TPC applet discovers that an entry in its private network database 34 is no longer valid, it updates the global private network database 37 with this information.

The entity 36 has also another important function: it updates the global private network database 37 with the content of the local private network topology databases 34 of each of the telecommunication terminals having such a database and, it updates the local private network topology databases of each of the telecommunication terminals in the vicinity of the coverage of the private network.

In this manner:
- each local database 34 has the physical topology of a private network and uses this knowledge to order or not the switch of the modem 35 of its UE 31 from a PLMN to the private network;
- the physical topology of a private network comprised in a given local database 34 is shared with the local databases of other eUICCs, through the global database 37.

The entity 36 thus learns the topology of one or a plurality of private networks dynamically from the secure elements 30 of the UEs 31 and shares this information with all secure elements 30 of other UEs 31 so that they can switch as soon as they are camped on the PLMN cells overlapping a private network.

The entity 36 learns the global topology of NPNs from all UEs and updates devices in the vicinity of location - either while a UE is uploading local NPN database updates or via regular polling (like every day for example).

The updates sent by the entity 36 to the eUICCs can be deltas, e.g. the entity 36 sends only the changes to each UE topology database 34. There is then no need to maintain a digital twin of the NPN database of each UE in the entity 36.

The entity 36 can be implemented using AI/ML (Artificial Intelligence / Machine Learning) techniques to extrapolate the coverage and remove outliers. Additionally, this can be used to detect fake cells aka IMSI catchers and alert the owner of the NPN (cyber defense application). Possible refinements of the invention are:
- An aging of database entries can be added (to handle better IOPS/tactical bubbles, ... ) and avoid wrong systematic switch;
- The connection to the entity 36 is not guaranteed, e.g. in case of SNPN. Therefore, pending changes could be buffered and sent only when connection to the entity 36 is possible;
- The convergence of the system can be speed up in case of PNI-NPN and the MNO knows the mapping of its network;
- The use of network measurements and timing advance (retrieved via Provide Local Information) can ensure more accurate topology and better where there is real coverage overlap (PLMN cells are usually higher power and therefore larger coverage than NPN cells);
- The entity 36 can use topology information to deduce more accurate coverage area of a NPN;
- The geolocation information can be added to the entity 36 which allows to reconstruct a map of the private network dynamically, in case the UE 31 supports geolocation info reporting;
   - Geolocation can help also delay the switch from PLMN to NPN to location where there is real coverage overlap (PLMN cells are usually higher power than NPN coverage)
   - In this case, we could even have a stealth mode where connection to PLMN is always disabled and based on geolocation (periodically fetched from the ME, the search of NPN can be triggered, without scanning for cellular networks which can take longer and consume more battery)

The advantages of the invention are that all NPN architectures, SNPN (Standalone NPN) and PNI-NPN (Public Network Integrated NPN) are supported seamlessly, the switching from a HPLMN to a NPN is fast because and does not require complicated network planning and administrative overhead.

The invention also supports the case when private network is part of HPLMN and HPPLMN search is not available.

The invention also concerns an applet 33 and an entity 36 of such a system.

## Claims

1. A system for switching the connection of a secure element (30) from a public network to a private network, said secure element (30) cooperating with a telecommunication terminal (31), wherein it comprises:
- an entity (32) connected to or comprising a global private network database (37) storing the physical topology of said private network, said entity (32) being accessible by said telecommunication terminal (31), said physical topology of said private network being dynamically updated by at least secure elements of telecommunication terminals having access to said private network,
- in each of a plurality of secure elements having access to said private network and cooperating with telecommunication terminals (31), an applet (33) comprising or being connected to a local private network topology database (34) sharing its content with said global private network database (37), said applet (33) switching the connection of said secure element (30) from a public network to said private network when said applet (33) considers that the telecommunication terminal (31) with which it cooperates enters in the coverage of the physical topology of said private network, based on the content of said local private network topology database (34).

2. System according to claim 1, wherein said secure element (30) is one of:
- a Sim card,
- an UICC,
- an eUICC, or
- an iUICC.

3. System according to claims 1 or 2, wherein said entity (32) is a server or a SaaS.

4. System according to any of the claims 1 to 3, wherein said global private network database is also updated by inputs from the MNO operating said private network.

5. System according to any of the claims 1 to 4, wherein each of the telecommunication terminals having said applet, records in said applet, when registered on said private network, records its current location information and uses a CAT EVENT DOWNLOAD - Location Status Event to update its local private network database.

6. System according to claim 5, wherein said location information contains its MCC, MNC, Cell-Id and Timing Advance.

7. System according to any of the claims 1 to 6, wherein if one of said telecommunication terminals having said applet has found an identifier of said private network in his high Priority PLMN list, and after registration attempt to said private network is successful, said applet updates said local private network database with its current location information.

8. System according to any of the claims 1 to 7, wherein if one of said applets has switched the connection of its secure element (30) from a public network to said private network and if the registration of said secure element (30) with said private network fails, said applet updates its local private network database to indicate that said private network is not available.

9. System according to any of the claims 1 to 8, wherein if one of said applets discovers that an entry in said private network database is no longer valid, it updates said global private network database with this information.

10. System according to any of the claims 1 to 9, wherein said entity (32):
- updates said global private network database with the content of the local private network topology databases of each of said telecommunication terminals;
- updates the local private network topology databases of each of the telecommunication terminals in the vicinity of the coverage of said private network.

11. An applet of a system according to any of the claims 1 to 10.

12. An entity (32) of a system according to any of the claims 1 to 10.
